Europäisches Patentamt

European Patent Office

Office européen des brevets

(11) Publication number: **0 447 821 A1**

# EUROPEAN PATENT APPLICATION

(21) Application number: 91102396.8

(22) Date of filing: **20.02.91**

(51) Int. Cl.⁵: **F16L 5/02, H02G 3/22**

(30) Priority: **19.03.90 DE 4008740**

(43) Date of publication of application:
**25.09.91 Bulletin 91/39**

(84) Designated Contracting States:
**AT BE CH DE DK ES FR GB GR IT LI LU NL SE**

(71) Applicant: **Walter Rose GmbH & Co. KG**
**Lütkenheider Strasse 2**
**W-5800 Hagen 1(DE)**

(72) Inventor: **Fremgen, Dieter**
**Hans-Böckler-Strasse 46**
**W-5603 Wülfrath(DE)**
Inventor: **Papenheim, Friedbert**
**Ernststrasse 7**
**W-5860 Iserlohn(DE)**
Inventor: **Adamaszek, Dieter**
**Schmiedeweg 12**
**W-4708 Kamen(DE)**

(74) Representative: **Patentanwälte Meinke und**
**Dabringhaus Dipl.-Ing. J. Meinke Dipl.-Ing. W.**
**Dabringhaus**
**Westenhellweg 67**
**W-4600 Dortmund 1(DE)**

(54) **Device for sealing cable conduits occupied by one or more cables, in cable ducts.**

(57) A device (1) for sealing cable conduits (2) of plastics material, occupied by one or more cables, in cable ducts, walls (3) of buildings or the like, which comprises a longitudinally divided sealing cylinder element (5) which grips into the cable conduits (2) in regions, a clamping device for applying a clamping and sealing force and a shrinkable sleeve (13) as the transition between divided sealing cylinder element (5) and the outer surface of the cable (4) passing through the cable conduit (2), is used to provide a solution in which both the mounting and the manufacture of such devices is simplified and which makes it possible for them to be used for a variety of applications.

This is achieved as a result of the fact that the divided sealing cylinder element (5) is equipped with a divided thrust/sealing collar (8) having a ring seal (9), the thrust/sealing collar (8) being arranged to be displaceable on the outer circumference of the sealing cylinder element in the axial direction (5) by means of a threaded ring (10).

Fig. 2

The invention relates to a device for sealing cable conduits, occupied by one or more cables, in cable ducts, walls of buildings or the like, and particularly to a device for sealing such cable conduits made of plastics material, and especially to a device comprising

(i) a longitudinally divided sealing cylinder element which grips into the cable conduits in regions,

(i i) a clamping device for applying a clamping and sealing force and

(i i i) a shrinkable sleeve as the transition between the divided sealing cylinder element and the outer surface of a cable passing through the cable conduit.

Different constructions of such sealing devices are known. DE 36 16 423-C1 and DE 37 10 755-A1 of the Applicant are mentioned here by way of example.

While the known solutions already have advantages over other, very expensive sealing techniques, there are applications in which handling can be further simplified, especially as far as divided sealing devices are concerned. Some constructions are also comparatively complex and therefore expensive to manufacture, and improvements can be made in that respect also. In addition, there are applications in which internal sealing is very difficult. In that case, the end of cable conduits has to be sealed. There are also applications in which the cable conduits themselves are of divided construction so that, by joining the half-shells together, grooves and projections are formed in the interior, which makes it possible for rotationally symmetrical elements, especially undivided rotationally symmetrical elements, to be used only with difficulty.

The object of the invention is therefore to provide a solution with which both the mounting and the manufacture of such devices is simplified and which makes it possible for them to be used for a variety of applications.

This object is achieved according to the invention with a device of the kind described at the beginning as a result of the fact that the divided sealing cylinder element is equipped with a divided thrust/sealing collar having a ring seal, the thrust/sealing collar being arranged to be displaceable on the outer circumference of the sealing cylinder element in the axial direction by means of a threaded ring.

With this solution it is possible to seal the ends of the cable conduits in a simple manner without having to forgo the other advantages of devices of the generic kind.

It is possible, in principle, to shrink shrinkable sealing sleeves onto the outwardly projecting outer circumference after mounting the sealing cylinder elements, but the invention preferably provides, in construction, for the threaded ring which acts on the thrust collar to be provided with clamping elements for fixing a shrinkable sleeve in position.

For fixing the sealing cylinder element in the cable conduits the invention preferably provides that the sealing cylinder element is provided, as is known per se, with sheet metal claws on its outer circumference. In particular, sheet metal claws are preferably arranged on the circumference, in two spatially separate planes.

As a result of the latter measure it is possible to obtain a firm fit of the particular sealing cylinder elements in the cable conduits, even in situations when it is not possible to support the conduit towards the outside thereof.

In another embodiment, the invention provides that, in a device of the generic kind, for achieving the object dscribed above, the sealing cylinder element is preferably equipped, at the partition, with a wall region of thicker material. In this case there is preferably also provided, in the wall region of thicker material, an expanding wedge for producing an expanding movement.

The embodiment described above has additional advantages. It is comparatively simple to manufacture and is able to adapt to different conduit diameters by certain dimensional differences, which considerably simplifies inventory and so on.

Especially the case of this last-mentioned embodiment, but also in other embodiments, it is preferred to provide on the outer circumference of the cylinder, at least one ring of sealing composition beside the clamping claws. Like the provision of clamping claws, the provision of seals on the outer circumference is known per se. Reference should be made in this connection to the above-mentioned DE 36 16 423 of the Applicant.

In construction, the invention also preferably provides for a tightening element, for applying the closure force and/or for tightening the shrinkable sleeve to be provided on the outwardly projecting region of the cylinder surface.

Independently of the solution variants described above, provision can also be made in each of the devices for the wall region of the sealing cylinder element that lies opposite the partition to be of thinner material.

Particularly in the case of longitudinally divided devices, this special feature according to the invention represents a simple constructional means, for example, of providing the user with a hinge-like region with which the device can be opened up to a comparatively great extent and then shut to lock in the closure position once the cable to be sealed, passing through the cable conduit, has been surrounded.

Also at least one partial region of the outer wall of the sealing cylinder element may, in some embodiments, be thinner tangentially.

The tangentially connecting regions of the outer wall of the sealing cylinder element make it possible to insert such elements also into divided cable conduits in which inwardly projecting beads and the like are present in the plane of the join; adaptation of the outer wall can then be made by these tangentially thinner regions.

The invention is described in detail below by way of example with reference to the drawings, in which:

Fig.1 shows a first embodiment of the invention, partly in section, in the unmounted state,

Fig.2 shows the same device in the mounted state,

Fig 3 shows a modified embodiment of the invention, partly in section, in the mounted state,

Fig 4 shows sections along the line IV - IV both in Fig. 2 and in

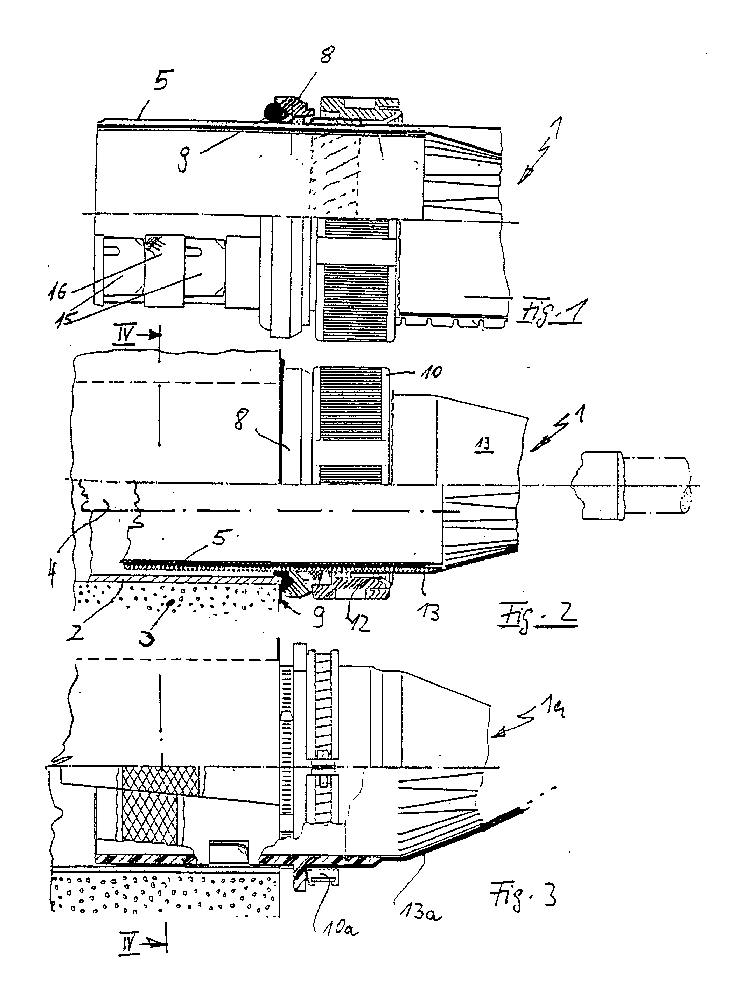

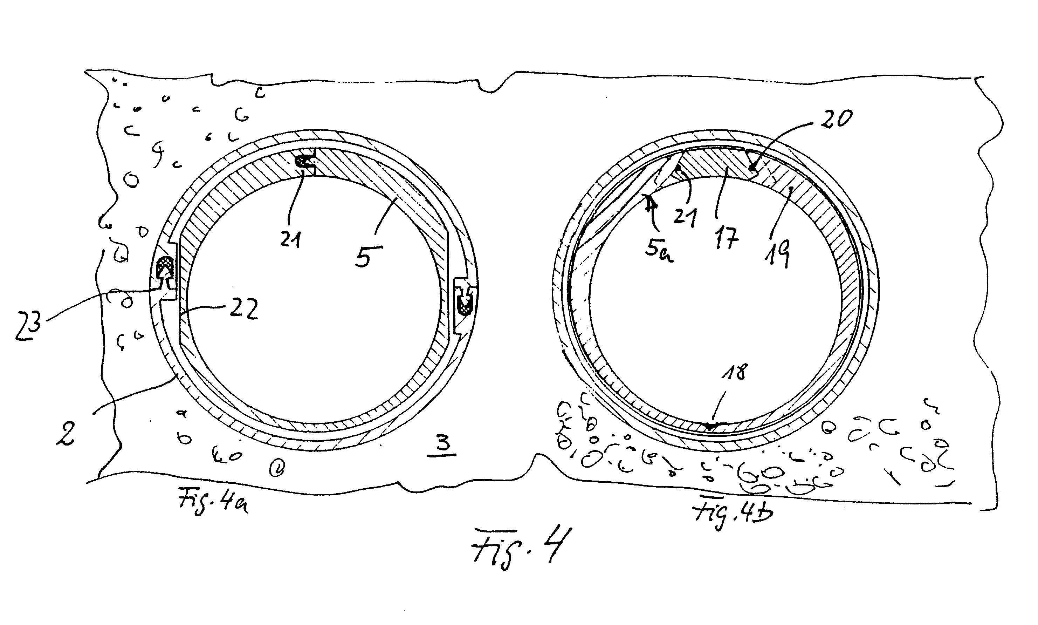

Fig. 3, designated Fig 4a and 4b,

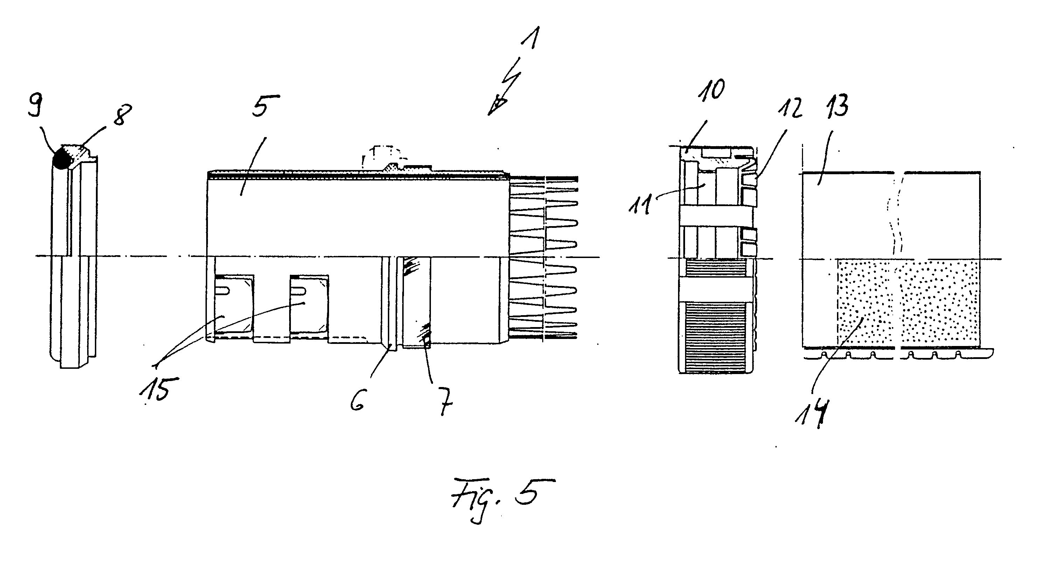

Fig 5 shows an assembly drawing of the elements of the first embodiment of the invention and

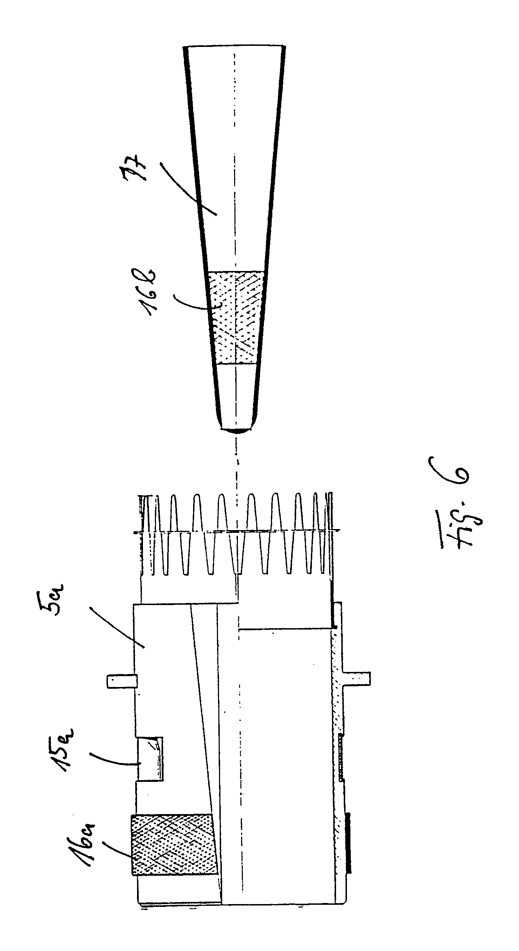

Fig 6 shows an assembly drawing of the elements according to the second embodiment.

First of all, the embodiment shown in Figures 1, 2, 4a and 5 will be described:

The device shown and generally designated 1 is used to seal a cable conduit 2 of plastics material which passes through a wall 3 of a cable duct. Located in the interior is a cable which has been pulled into the conduit, and is designated by broken lines 4 in Figure 2.

In order to seal the cable conduit 2 with respect to the jacket (not shown or provided with a reference numeral) of the cable 4, the device 1 according to the invention is used. In the embodiment shown in Figures 1, 2, 4a and 5, the device 1 consists of a sealing cylinder element 5 of plastics material which has a stop shoulder 6 on its outer circumference and an external thread 7. The stop shoulder 6 serves as a propelling means for a thrust collar 8 or an annular seal 9. The thrust collar 8 is displaceable in the sealing direction by a threaded ring 10 which acts by means of its internal thread 11 on the thread 7 of the sealing cylinder element 5.

In the example shown in Figures 1, 2, 4a and 5 the threaded ring 10 is additionally equipped with cramps 12 or retaining clips for the fixing of a shrinkable sleeve, designated 13, having an adhesive inner coating 14.

The thrust collar 8, the ring seal 9, the sealing cylinder element 5, the threaded ring 10 and the sealing sleeve 13 are all longitudinally divided in order that, in the mounting position, they can be placed around a cable 4 that has already been installed, and pushed into the cable conduit 2.

To grip firmly against the inside of the cable conduit 2, the sealing cylinder element 5 has sheet metal claws 15 arranged at least in pairs and distributed over the circumference in order thereby to enable the device to be supported against the inner wall of the cable conduit 2 and to prevent the device 1 from tilting. Between the sheet metal claws 15 distributed over the circumference, a sealing strip 16 may additionally be provided, as indicated in Figure 1.

The embodiment shown in Figures 3, 4b and 6 illustrates an alternative solution, wherein components having the same function bear the same reference numeral supplemented by the letter Thus, the device 1a is formed by a longitudinally divided sealing cylinder element 5a with clamping claws 15a on the outside, the sealing ring 16a, a shrinkable tubing sleeve 13a which is held by means of a claw ring analogous to the clamping claws 12 in Figure 5 so that, in figure 3, this clamping and tightening ring is given the reference numeral 10a.

The special nature of the construction resides inter alia in fact that here the clamping and expanding action is produced by means of an expanding wedge 17 having at least one region of sealing composition 16b. The construction is such that, as shown especially clearly in Fig. 4b, the expanding wedge 17 is guided in a region of the wall of the sealing cylinder element 5a that consists of thicker material, for example by means of dovetail like guides.

Opposite the plane of the join formed by the wedge 17 a region of thinner material and, in particular, a film-hinge-like region, merely suggested in Figure 4 and designated 18, can be provided. The otherwise comparatively thin wall thickness may, in addition to the thicker wall region, also frequently be sufficient for executing an expanding movement. The regions of thicker material are designated 19, the guide faces of the expanding wedge 17 are designated 20, and sealing threads, designated 21, may also be pulled in here.

Finally, Figure 4a shows the possibility of making tangential wall regions thinner. The thinner wall regions bear the reference numeral 22 in Figure 4a, while the plane of the join of the divided cable conduits shown therein is designated 23.

The described embodiments of the invention can, of course, still be modified in many respects without departing from the basic concept. In particular, the sealing rings, thrust collars and threaded sleeves or tightening rings which participate in sealing can each have a form other than that shown.

**Claims**

1. A device (1) for sealing cable conduits especially for cable conduits made of plastics material, that are occupied by one or more cables (4), in cable ducts, walls (3) or buildings or the like, the device comprising a sealing cylinder element (5) which grips into the cable conduits (2) in regions, a clamping device (12) for applying a clamping and sealing force, and a shrinkable sleeve (13) as the transition between the sealing cylinder element (5) and the outer surface of a cable (4) passing through the cable conduit (2), characterised in that the sealing cylinder element (5) is equipped with a divided thrust/sealing collar (8) having a ring seal (9), the thrust/sealing collar being arranged to be displaceable on the outer circumference of the sealing cylinder element (5) in the axial direction by means of a threaded ring (10).

2. A device according to claim 1, characterised in that the sealing cylinder element is longitudinally divided.

3. A device according to claim 1 or 2, characterised in that the threaded ring (10) which acts on the thrust collar (8) is provided with clamping elements (12) for fixing the shrinkable sleeve (13) in position.

4. A device according to claim 1, 2 or 3 characterised in that the sealing cylinder element (5) is provided, as is known per se, with sheet metal claws (15) on its outer circumference.

5. A device according the claim 4, characterised in that the sheet metal claws (15) are arranged on the circumference in two spatially separated planes.

6. A device (1a)for sealing cable conduits (2), occupied by one or more cables (4), in cable ducts, walls (3) of buildings or the like, which comprises a longitudinally divided sealing cylinder element (5a) which grips into the cable conduits (2) in regions, a clamping device (12) for applying a clamping and sealing force and a shrinkable sleeve (13) as the transition between the divided sealing cylinder element (5a) and the outer surface of a cable (4) passing through the cable conduit, characterised in that the sealing cylinder element (5a is equipped, at the partition of the longitudinal divide, with a wall region of thicker material (19), whereby an expanding wedge (17) can be provided in the wall region of thicker material (19) to produce an expanding movement of the sealing cylinder element (5a).

7. A device according to any one of the preceding claims, characterised in that at least one ring of sealing composition (16) is provided on the outer circumference beside the clamping claws (15).

8. A device according to claims 6 or 7, characterised in that a tightening element (10a)for applying the closure force and/or tightening the shrinkable sleeve (13a) is provided on the outwardly projecting region of the cylinder surface.

9. A device according to any of the preceding claims, characterised in that the cylinder element (5,5a) is longitudinally divided, and the wall region (18) of the sealing cylinder element (5,5a) that lies opposite the partition is constructed of thinner material.

10. A device according to any of the preceding claims, characterised in that at least one partial region (22) of the outer wall of the sealing cylinder element (5,5a) is of thinner construction tangentially.

Fig. 1

Fig. 2

Fig. 3

Fig. 4

Fig. 4b

Fig. 4a

Fig. 5

EP 0 447 821 A1

Fig. 9.

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE - B2 - 2 635 613 (FESTO-MASCHINENFABRIK GOTT-LIEB-STOLL) * Totality * | 1 | F 16 L 5/02 H 02 G 3/22 |
| A | EP - A1 - 0 259 765 (DYCKERHOFF & WIDMANN AG) * Totality * | 1 | |
| A | DD - A - 143 460 (VEB KOMBINAT TIEFBAU BERLIN) * Totality * | 1 | |

| | | | TECHNICAL FIELDS SEARCHED (Int. Cl.5) |
|---|---|---|---|
| | | | F 16 L 5/00 H 02 G 3/00 |

The present search report has been drawn up for all claims

| Place of search | Date of completion of the search | Examiner |
|---|---|---|
| WIEN | 24-05-1991 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document